# EUROPEAN PATENT APPLICATION

(11) **EP 2 521 347 A1**
(43) Date of publication of application: **07.11.2012**
(21) Application number: 12164580.8
(22) Date of filing: 18.04.2012
(51) Int. Cl.: H04N 1/21, H04N 1/00, H04N 5/232, G06F 9/44

(54) **Time dependent help display**

(30) Priority: 28.04.2011 JP 2011102346
(71) Applicant: Canon Kabushiki Kaisha, Tokyo 146-8501 (JP)
(72) Inventor: Hitosuga, Emi, Tokyo, Tokyo 146-8501 (JP)
(74) Representative: TBK

(57) **Abstract**

When the display start instruction is received before an elapsed time since the immediately preceding display operation of an object such as a help screen, which does not fit the display area and can only be displayed partially, was ended reaches a predetermined time, a position based on a display position, which was displayed on the display area at an end timing of the display operation, is decided as an initial display position. When the display start instruction is received after the elapsed time is the predetermined time or longer, a display position is reset to the start of the object irrespective of the display position, which was displayed on the display area at the end timing of the display operation.

## Description

### BACKGROUND OF THE INVENTION

### Field of the Invention

The present invention relates to a technique for controlling a display range of an object to be displayed on a display screen.

### Description of the Related Art

Some of portable electronic devices such as digital cameras and cellular phones include data used to explain a use method of functions included in the devices, and can present that data as a help screen, so as to allow the user to know the use method even when he or she does not carry any instruction manual. In recent years, the contents of the help screen cannot often fall within a display range of a display device included in a device due to complexity of functions, a zoom function of display characters, and the like. In this case, in order to browse the contents of the help screen, which are not included in the display range, the user has to change the display range of the help screen by making a scrolling or page feeding operation of the help screen.

However, when the contents of the help screen cannot fall within the display range, the following problem is posed. For example, when the user actually operates a device while browsing an operation method on the help screen, every time he or she temporarily ends the display operation of the help screen, an initial display screen of the help screen is displayed even after the scrolling or page feeding operation, and the user has to make the operation again.

In order to solve such problem, for example, Japanese Patent Laid-Open No. 2006-65580 discloses a technique of allowing to display the same range as the previously displayed display range at the time of re-browsing by storing information of a display position of browsed digital data as bookmark data.

However, with the technique of Japanese Patent Laid-Open No. 2006-65580, when the bookmark data is stored in association with the digital data, since the same range as the previously displayed display range is unwantedly displayed, the user has to make an operation to browse a desired range.

As for browsing of, for example, the aforementioned help screen, a preferred display range is often different according to circumstances (the user wants to repetitively browse a help of an identical function, the display position of the help screen changes according to a selected item, and so forth). However, the technique of Japanese Patent Laid-Open No. 2006-65580 cannot often change the display range depending on such circumstances.

### SUMMARY OF THE INVENTION

The present invention has been made in consideration of the problems of the related art. The present invention provides a technique for suitably controlling a display range of an object depending on circumstances when the object is to be re-displayed.

The present invention in its first aspect provides a display control apparatus for executing control to display an object on a display area as specified in claims 1 to 12.

The present invention in its second aspect provides a control method of a display control apparatus for executing control to display an object on a display area as specified in claim 13.

The present invention in its third aspect provides a program as specified in claim 14.

The present invention in its fourth aspect provides a computer readable storage medium in claim 15.

Further features of the present invention will become apparent from the following description of exemplary embodiments (with reference to the attached drawings).

### BRIEF DESCRIPTION OF THE DRAWINGS

Fig. 1 is a block diagram showing the functional arrangement of a digital camera according to an embodiment of the present invention;

Fig. 2 is a rear view showing the outer appearance of a surface including a display device of the digital camera according to the embodiment of the present invention;

Fig. 3 is a flowchart of a help display process according to the embodiment of the present invention;

Fig. 4 shows a display example of a setting screen according to the embodiment of the present invention; and

Figs. 5A, 5B, and 5C show display examples of a help screen according to the embodiment of the present invention.

### DESCRIPTION OF THE EMBODIMENTS

A preferred embodiment of the present invention will be described in detail hereinafter with reference to the drawings. Note that the embodiment to be described hereinafter will exemplify a case in which the present invention is applied to a digital camera, which can control a display range of an object to be displayed on a display device, as an example of a display control apparatus. However, the present invention is applicable to an arbitrary device which can control a display range of an object to be displayed on a display device. In the description of this specification, "display range" indicates a partial range or area of an object to be displayed on a display area of a display device.

### (Arrangement of Digital Camera 100)

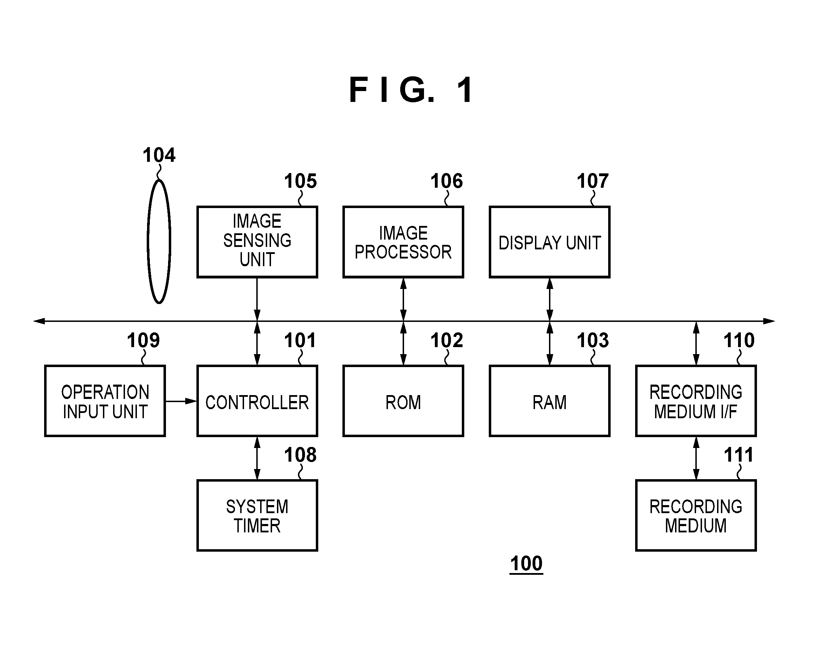

Fig. 1 is a block diagram showing the functional arrangement of a digital camera 100 according to an embodiment of the present invention.

A controller 101 is, for example, a CPU, which controls operations of respective blocks included in the digital camera 100. More specifically, the controller 101 controls the operations of the respective blocks by reading out a help display control process program stored in, for example, a ROM 102, expanding the readout program on a RAM 103, and executing the expanded program.

The ROM 102 is, for example, a rewritable nonvolatile memory such as an EEPROM, and stores parameters required for the operations of the respective blocks included in the digital camera 100, image sensing settings of the digital camera 100, and the like in addition to the help display control process program. Also, in this embodiment, the ROM 102 stores various GUI data to be displayed on a display unit 107 (to be described later) and help document data to be displayed on a help screen.

The RAM 103 is a volatile memory, and is used not only as an expansion area of the help display control process program, but also as an area for temporarily storing intermediate data and the like, which are output during the operations of the respective blocks included in the digital camera 100.

Note that in the following description of this embodiment, processes in the respective blocks included as hardware components in the digital camera 100 are implemented. However, the present invention is not limited to this, and the processes of the respective blocks may be implemented by programs which attain the same processes as the respective blocks.

An image sensing unit 105 includes, for example, an image sensor such as a CCD or CMOS sensor, and outputs an analog image signal by photoelectrically converting an optical image formed by an optical system 104. The analog image signal output from the image sensing unit 105 is output to an image processor 106 or display unit 107 (to be described later). Note that when output analog image signals shot by the image sensing unit 105 are sequentially output to be displayed (through-displayed) on the display unit 107, the display unit 107 can serve as an electronic viewfinder.

The image processor 106 is a block which applies predetermined image processes to the analog image signal output from the image sensing unit 105 or image data which is read out from a recording medium 111 (to be described later) and is input. The image processes to be applied by the image processor 106 includes, for example, an A/D conversion process, D/A conversion process, encoding process, decoding process, resize process, noise reduction process, color conversion process, and the like.

The display unit 107 is, for example, a display device such as a compact LCD, and displays an analog signal associated with input image data, GUI data or help document data stored in the ROM 102, and the like.

A system timer 108 is an internal timer included in the digital camera 100, and is used to measure times associated with processes, to hold the current time, and so forth. In the following description of this embodiment, this system timer 108 is used to measure a time from when a display operation of a help screen was ended until the help screen is displayed again. However, as can be easily understood by those who are skilled in the art, another hardware component having a time measuring function may be used.

A recording medium I/F 110 is an interface which controls data read/write accesses to the connected recording medium 111, and operates upon reception of an instruction from the controller 101. The recording medium 111 may be, for example, a recording area of an internal memory incorporated in the digital camera 100, or a recording device such as a memory card or HDD, which is detachably connected to the digital camera 100. For example, when an image sensing instruction is detected, the recording medium 111 records, via the recording medium I/F 110 image data which is output after it has been shot by the image sensing unit 105 and has undergone various image processes in the image processor 106.

An operation input unit 109 is a user interface such as a power switch and mode dial, which are included in the digital camera 100, and is a block which receives an operation input made by the user, and outputs a corresponding control signal to the controller 101.

### (User Interface of Digital Camera 100)

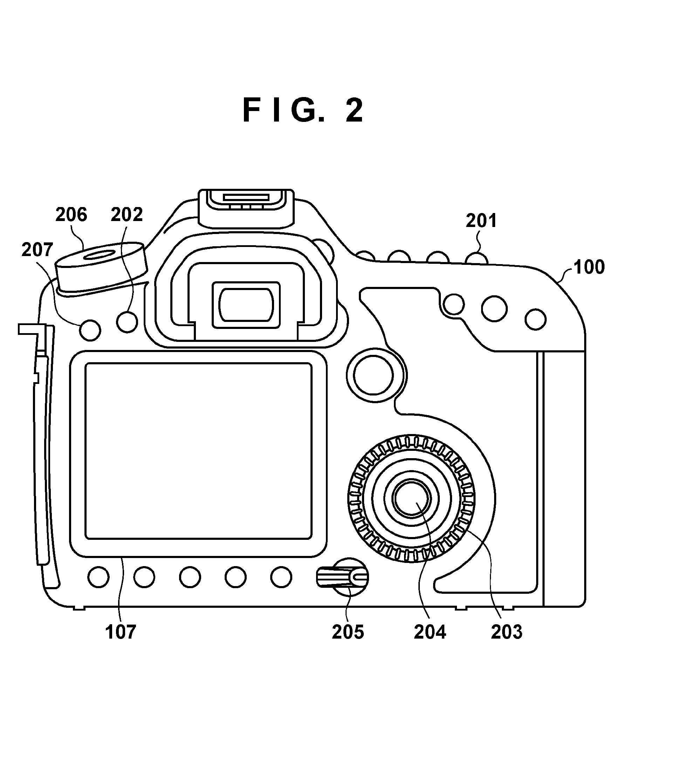

The user interface of the digital camera 100 will be described below with reference to Fig. 2. Note that Fig. 2 shows the outer appearance of a surface which includes the display unit 107 of the digital camera 100.

A shutter button 201 is an operation member used to receive an image sensing instruction, and outputs SW1 and SW2 signals to the controller 101 according to stroke amounts upon pressing of the member. An INFO button 202 is an operation member used to receive an instruction required to switch information to be displayed on the display unit 107. In this embodiment, the INFO button 202 is also used to input a display instruction of a help screen. A dial 203 is an operation member used to receive, for example, a candidate selection instruction on a setting screen and a scrolling operation instruction of the help screen. A SET button 204 is an operation member used to issue a decision instruction for a candidate selected by an instruction input by the dial 203 from items included in a setting screen. A power switch 205 is an operation member used to turn on a power supply of the digital camera 100, and switches a power-ON state and power-OFF state. A mode dial 206 is an operation member used to switch modes of the digital camera 100 such as a still image sensing mode, scene image sensing mode, moving image sensing mode, and the like. A MENU button 207 is an operation member used to input a display instruction of a menu screen respectively in the image sensing mode and browsing mode. The menu screen displayed by the MENU button 207 includes a plurality of setting items, and display of the display unit 107 transits to a setting screen (to be described later) when the user selects and decides one of these setting items.

### (GUI Transition Example)

In this embodiment, when the setting screen is displayed on the display unit 107 by a user operation, a help screen about a selected setting item or parameter candidates in a given setting item is displayed during a period in which the INFO button 202 is kept pressed.

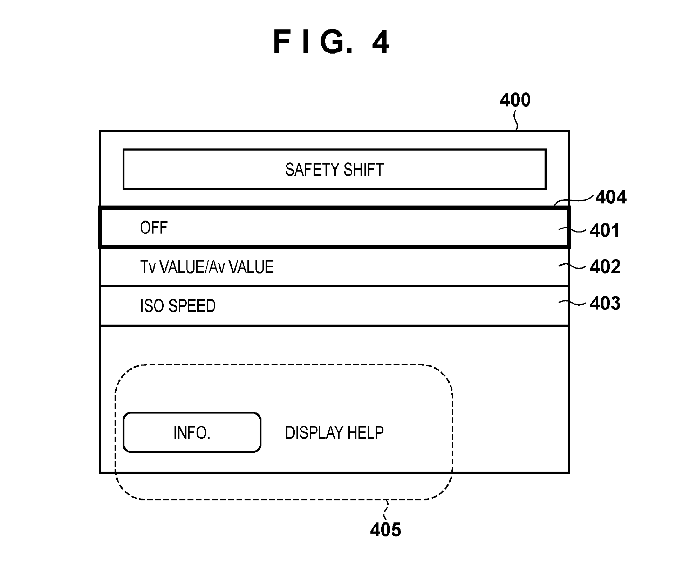

For example, as shown in Fig. 4, when a setting screen 400 about "safety shift" as a setting item is displayed, three parameter candidates 401 to 403, that is, "OFF" (no setting), "Tv value/Av value", and "ISO speed", are displayed on the screen. In the example of Fig. 4, "OFF" as the parameter candidate 401 is selected, and a selection frame 404 which allows the user to identify that candidate is displayed. Note that in a state in which the setting screen 400 is displayed on the display unit 107, the user can select another parameter candidate by operating the dial 203 to move the selection frame 404. On a lower area of the setting screen 400, an indication 405 required to notify the user that the help screen can be displayed upon operation of the INFO button 202 is made.

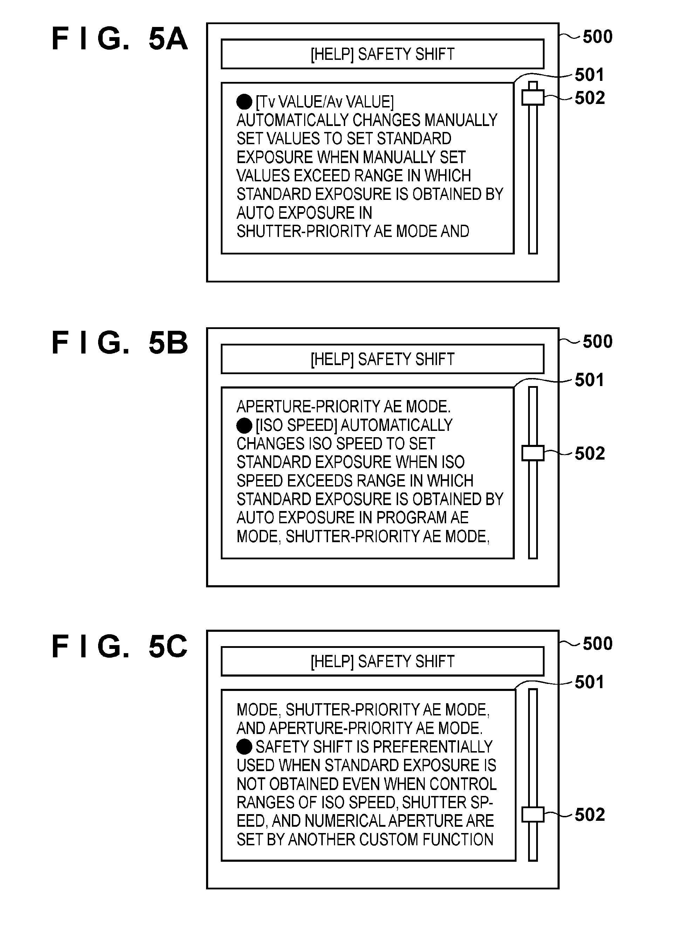

At this time, when the user keeps pressing the INFO button 202, display of the display unit 107 transits to a help screen shown in Figs. 5A to 5C. In this embodiment, assume that upon transition from display of the setting screen 400 to a help screen 500, an explanation display area 501 normally displays help document data about "safety shift", which starts from the beginning of the data and falls within a range of the area 501, as shown in Fig. 5A. A display range of the help document data displayed on the explanation display area 501 is indicated by an indicator 502, which indicates a positional relationship of the range with respect to the whole help document data.

The display range of the help document data displayed on the explanation display area 501 is movable to a range other than an initial display range when the user turns the dial 203 while pressing the INFO button 202, and a display position of the indicator 502 transits according to that turning operation. For example, when a range which follows the display range of the help document data displayed on the explanation display area 501 shown in Fig. 5A is set as a new display range by the operation input with the dial 203, the help screen 500 is displayed on the display unit 107, as shown in Fig. 5B. When the display range of the help document data reaches the rear end, the help screen 500 is displayed, as shown in Fig. 5C. Assume that this embodiment requires at least a page feeding operation or scrolling operation by means of the dial 203 so as to display information of a whole range of the help document data on the explanation display area 501.

In general, when a re-display instruction is input within a short time interval after the display operation of the help screen 500 was ended, it is regarded that the user desires to browse the same explanation as the previous explanation. On the other hand, as a longer time elapses after the display operation of the help screen 500 was ended (for example, the user makes another operation after the display operation of the screen 500 was ended), a possibility that the user desires to browse the same explanation as the previous explanation becomes lower. In this embodiment, when a display instruction of the help screen 500 is issued again after the display operation of the help screen 500 was ended, an initial display range of the help document data displayed on the explanation display area 501 is controlled according to a time elapsed since the end of the display operation until a re-display instruction is issued. That is, a predetermined time used to judge whether or not the same display range as the previous range is displayed upon re-displaying the help screen 500 is set to execute display control, thereby presenting the help screen that the user is more likely to desire.

Note that in the following description, when display of the display unit 107 transits from the setting screen 400 to the help screen 500, a prescribed display range from the beginning of the help document data is displayed on the explanation display area 501 after an elapse of the predetermined time. However, the present invention is not limited to this. For example, when the help document data includes explanations about a plurality of parameter candidates, a range including an explanation position part according to a parameter candidate selected on the setting screen 400 upon transition to the help screen 500 may be displayed as the display range. That is, the display range of the help document data after an elapse of the predetermined time can be a range, which is different from a range prescribed as the "previous display range" and is prescribed based on pre-set criteria.

This embodiment will exemplify the digital camera 100 which has specifications of displaying the help screen only during a period in which INFO button 202 is kept pressed as an example required to explain a situation in which the user unwantedly ends the display operation of the help screen, and desires to re-display the help screen. However, the present invention is not limited to such specific specifications. For example, as can be easily imagined, the present invention is applicable to an arrangement which switches whether or not to display the help screen upon pressing of the INFO button 202, that which automatically ends the display operation of the help screen after an elapse of a given time, and the like.

### (Help Display Control Process)

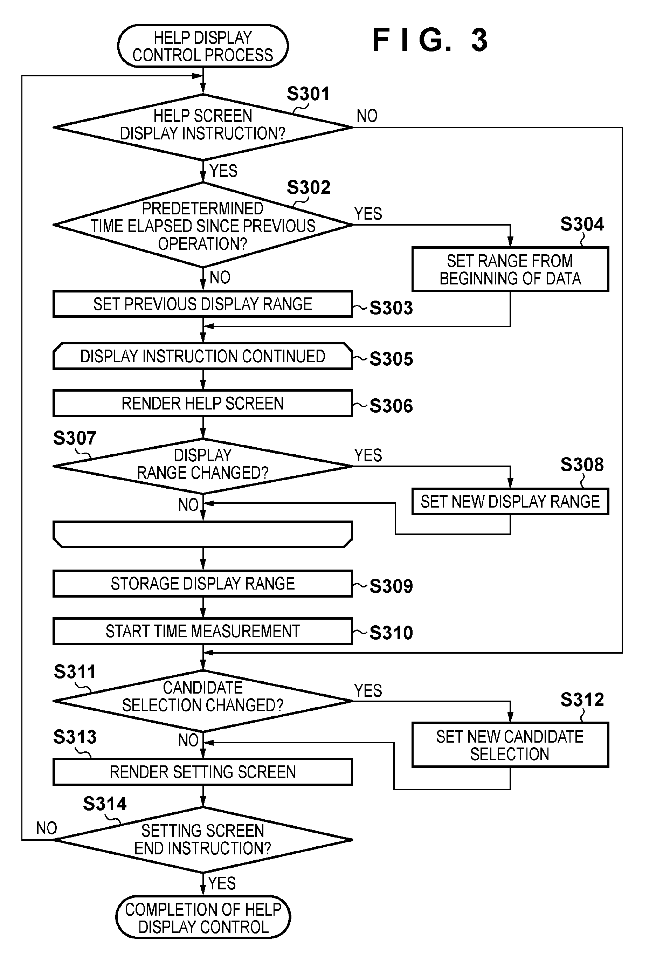

A detailed help display control process of the digital camera 100 of this embodiment with the aforementioned arrangement will be described below with reference to the flowchart shown in Fig. 3. The processes corresponding to the flowchart can be implemented when the controller 101 reads out a corresponding processing program stored in, for example, the ROM 102, expands the readout program onto the RAM 103, and executes the expanded program. Note that the following description will be given under the assumption that this help display control process is started, for example, when the user selects a specific setting item on the menu screen, that is, when the setting screen shown in Fig. 4 is to be displayed.

The controller 101 judges in step S301 whether or not a help screen display instruction is detected. More specifically, the controller 101 judges the presence/absence of the help screen display instruction by checking whether or not it receives, from the operation input unit 109, a control signal corresponding to an input made when the user operates the INFO button 202. If the controller 101 judges that the help screen display instruction is detected, the process advances to step S302; otherwise, the process jumps to step S311.

The controller 101 judges in step S302 whether or not the predetermined time or longer has elapsed since the previous display operation of the help screen about a setting item corresponding to the currently displayed setting screen was ended. More specifically, the controller 101 judges whether or not a count value of system timer 108, which has been started when the previous display operation of the help screen about the current setting item was ended, indicates a value equal to or larger than the predetermined time. That is, in this step, the controller 101 judges whether the display range of the help document data displayed when the help screen about the corresponding setting item is to be displayed is set to be that displayed when the previous display operation was ended or that from the beginning of the data.

Note that the predetermined time is a time set as a threshold required to control the display range of the help document data, and it may be stored in advance in the ROM 102 at the time of factory delivery, or may be set by the user. The present invention is not limited to the arrangement which controls the system timer 108 to count the time elapsed since the previous display operation of the help screen was ended. For example, in order to allow to measure elapsed times since the display operation of the help screen was ended in association with a plurality of setting items, the count values of the system timer 108 at the end timings of the display operations may be stored in the RAM 103, and may be subtracted from the count value of the system timer 108 in this step. Also, if the predetermined time or longer has elapsed after the display operation was ended, the count operation which has been started by the system timer 108 may be stopped or count data stored the predetermined time or longer before may be deleted.

If the controller 101 judges that the elapsed time since the previous display operation of the help screen of the current setting item was ended is not equal to or longer than the predetermined time, the process advances to step S303; otherwise, the process advances to step S304.

Note that, it is disclosed that the controller 101 judges whether or not the predetermined time or longer has elapsed since the previous display operation of the help screen about a setting item corresponding to the currently displayed setting screen was ended in this embodiment. However the standard of the judgment is not limited to this. That is, the controller 101 may judge that the help screen display instruction is detected before or after the predetermined time since the previous display operation of the help screen about a setting item corresponding to the currently displayed setting screen was ended.

In step S303, the controller 101 sets the display range of the help document data of the current setting item, which is to be initially displayed on the explanation display area of the help screen, to be a range which is stored in the ROM 102 in association with the current setting item, and was displayed on the area at the end timing of the previous display operation.

If the predetermined time or longer has elapsed since the previous display operation of the help screen of the current setting item was ended, the controller 101 sets the display range of the help document data of the current setting item, which is to be initially displayed on the explanation display area of the help screen, to be a range from the beginning of the data in step S304.

The controller 101 judges whether or not the display instruction of the help screen is continued, and executes a loop process in steps S305 to S308. More specifically, the controller 101 judges whether or not the user keeps pressing the INFO button 202, and a control signal indicating that the operation state of the INFO button 202 is kept received from the operation input unit 109. Then, if the controller 101 judges that the display instruction of the help screen is continued, it executes the loop process in steps S305 to S308; otherwise, it exits the loop process to complete the display operation of the help screen, and the process advances to step S309.

In step S306, the controller 101 controls the image processor 106 to generate data of the help screen by rendering the display range set for the help document data of the current setting item on the explanation display area, and controls the display unit 107 to display that help screen.

The controller 101 judges in step S307 whether or not an operation input to change the display range of the help document data, which is currently displayed on the explanation display area of the help screen, is detected. More specifically, the controller 101 judges the presence/absence of a display range change operation by checking whether or not it receives, from the operation input unit 109, a control signal corresponding to an input made when the user operates the dial 203. If the controller 101 judges the operation input to change the display range of the help document data is detected, the process advances to step S308; otherwise, the process advances to step S309.

In step S308, the controller 101 changes the display range of the help document data according to the operation input detected in step S307. More specifically, the controller 101 calculates a moving direction and amount of the display range according to information of a turning direction and amount of the dial 203 input from the operation input unit 109, and decides a new display range.

If it is judged that no help screen display instruction is detected, and the control exits the loop process in steps S305 to S308, the controller 101 acquires information of the display range of the currently displayed help document data, and stores it in the RAM 103 in association with the current setting item in step S309. Furthermore, the controller 101 controls the system timer 108 to start time measurement in step S310.

The controller 101 judges in step S311 whether or not an input to change selection of a parameter candidate on the setting screen is detected. More specifically, the controller 101 judges the presence/absence of the change input of candidate selection by checking whether or not it receives, from the operation input unit 109, a control signal corresponding to an input made when the user operates the dial 203. If the controller 101 judges that the input to change selection of the candidate on the setting screen is detected, the process advances to step S312; otherwise, the process advances to step S313.

In step S312, the controller 101 changes a parameter candidate to be selected on the setting screen in accordance with the operation input detected in step S311. More specifically, the controller 101 changes a parameter candidate to be selected in accordance with information of a turning direction and amount of the dial 203 input from the operation input unit 109, and stores information of the changed parameter candidate in, for example, the RAM 103.

In step S313, the controller 101 controls the image processor 106 to generate data of the setting screen on which the selection frame is superimposed on the selected parameter candidate, and controls the display unit 107 to display that setting screen.

The controller 101 judges in step S314 whether or not to end the display operation of the setting screen. More specifically, the controller 101 judges whether or not to end the display operation of the setting screen by checking whether or not it receives, a control signal corresponding to an operation input required to end the display operation of the setting screen by the user from the operation input unit 109. If the controller 101 judges that the display operation of the setting screen is to end, it completes this help display control process; otherwise, the process returns to step S301.

Note that the operation input required to end the display operation of the setting screen is not limited to a display end instruction of the setting screen issued when the user operates the MENU button 207. For example, that operation input may be a selection decision instruction associated with the parameter candidate on which the selection frame is superimposed upon operation of the SET button 204. On the other hand, for example, when an image sensing instruction is issued when the user operates the shutter button 201, since a possibility that the user desires to browse the same display range of the help document data again is low, the measurement of the elapsed time may be reset, and that operation may be judged as the setting screen display end operation. In this manner, at the next display timing of the help screen after the image sensing process, a range from the beginning of the data is set as an initial display range irrespective of the display range at the previous display end timing of the help screen. Also, for example, when the user operates the mode dial 206 to change the image sensing mode, since a possibility that the user changes the setting parameters to be different from the current setting parameters is high, the measurement of the elapsed time may be reset, and that operation may be judged as the setting screen display end operation. Note that in case of a process for changing the image sensing mode, the process may return to step S301 without completing the help display control process, so as to allow the user to change settings about the changed image sensing mode. When the user changes not only the image sensing mode but also settings about another image sensing operation, the measurement of the elapsed time may be reset, and at the time of the next help screen display, a range from the beginning of the data may be set as an initial display range irrespective of the display range at the previous display end timing of the help screen.

Note that this embodiment has exemplified the case in which the display range of the help document data (help information) to be displayed on the explanation display area of the help screen is controlled. However, the present invention is not limited to this. That is, the present invention is applicable to object display control which requires a process for setting a different display range so as to display a full range upon displaying data on a specific display area, and the display data is not limited to document data such as image data, as can be easily understood by those who are skilled in the art.

The digital camera 100 may further have a reset instruction reception button which receives a reset instruction from the user. At this time, when the user presses the reset instruction reception button, even when the controller 101 receives the display instruction of the help screen (pressing of the INFO button 202) before the elapsed time since the last display operation of the help screen reaches the predetermined time, it may display the help screen to have a range from the beginning of the data as an initial display range. Thus, when the user makes an explicit operation, the controller 101 can promptly display the help screen from the beginning of the data irrespective of an elapse of the predetermined time.

Note that the aforementioned predetermined time used in the checking process in step S302 is considered as that required to check whether or not the user accidentally releases the INFO button 202, and presses the INFO button 202 so as to promptly display the help screen again, and is preferably set to be several sec (for example, about not more than 6 sec: 1 sec). The user accidentally releases the INFO button 202, for example, when the pressing force of the finger on the INFO button 202 is slacked off or when the pressing finger position on the INFO button 202 is displaced due to sweat or an excessive pressure.
In such case, when the user presses the INFO button 202 again within a few sec, it is assumed that the user wants to browse the sequel of the help screen by pressing the INFO button 202 again since he or she accidentally releases the INFO button 202 in place of the closing operation of the help screen. Conversely, when the user presses the INFO button 202 again after an elapse of 6 sec or longer, the release operation of the INFO button 202 before that pressing operation can be assumed as an intended one, and a new pressing operation of the INFO button 202 can also be considered not as the browsing operation of the sequel of the previous browsing operation.

As described above, the display control apparatus of this embodiment can suitably control a display range of an object depending on the situation when the object is to be re-displayed. More specifically, upon reception of a display start instruction of an object, which is larger than a display region, on the display region, the display control apparatus controls to display a partial range of the object as a display range on the display area. At this time, when the display start instruction is received before the elapsed time since the immediately preceding display operation of the object was ended reaches the predetermined time, a range based on the display range displayed on the display area at the display end timing is decided as an initial display range. When the display start instruction is received after the elapsed time is equal to or longer than the predetermined time, a display range, which is decided based on predetermined criteria, is decided as an initial display range irrespective of the display range displayed on the display area at the display end timing.

In this manner, when the user accidentally aborts the object display operation, and when he or she repetitively performs the object browsing operation and another operation, a desired display range of the object can be easily presented. Furthermore, when a condition that the previous display range need not be displayed at the re-display timing of the object is satisfied, a display range selected based on criteria different from the previous display range can be controlled to be displayed. That is, complicated operations or extra operations due to the display operation of the previous display range can be avoided from being required.

Note that the control of the controller 101 may be executed by a single hardware component, or the overall apparatus may be controlled when a plurality of hardware components share processes.

The present invention has been described in detail by way of its preferred embodiments. However, the present invention is not limited to such specific embodiments, and various aspects without departing from the scope of the present invention are included in the present invention. Furthermore, the aforementioned embodiments merely present embodiments of the present invention, and respective embodiments can be combined as needed.

The aforementioned embodiment has explained the example in which the present invention is applied to the digital camera. However, the present invention is not limited to such specific example, and is applicable to a display control apparatus which can display information associated with a setting item, a setting operation of which is underway. That is, the present invention is applicable to a personal computer, PDA, cellular phone terminal, portable image viewer, printer having a display, digital photo frame, music player, game machine, e-book reader, and the like.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
When the display start instruction is received before an elapsed time since the immediately preceding display operation of the object was ended reaches a predetermined time, a range based on a display range, which was displayed on the display area at an end timing of the display operation, is decided as an initial display range. When the display start instruction is received after the elapsed time is the predetermined time or longer, a display range, which is decided based on predetermined criteria, is decided as an initial display range irrespective of the display range, which was displayed on the display area at the end timing of the display operation.

## Claims

1. A display control apparatus for executing control to display an object on a display area, comprising:
instruction means for receiving a display start instruction of the object;
display control means for controlling to display a partial range of the object on the display area as a display range in place of a full range in response to the instruction received by said instruction means;
change means for changing the display range of the object after a display operation of the object is started; and
control means for, when said instruction means receives the instruction before an elapsed time since a last display operation of the object was ended reaches a predetermined time, controlling said display control means to start a display operation to have a range based on a display range at an end timing, which was displayed on the display area when the last display operation was ended, as the display range, and for, when said instruction means receives the instruction after the elapsed time reaches the predetermined time, controlling said display control means to start a display operation to have a range, which is not based on the display range at the end timing as the display range.

2. The apparatus according to claim 1, wherein said display control means controls to display the object on the display area while said instruction means continuously receives the instruction after the display operation of the object is started in response to the instruction received by said instruction means, and to end the display operation of the object when the instruction is not detected.

3. The apparatus according to claim 1 or 2, wherein when said instruction means receives the instruction, while an item displayed on the display area is selected, after the elapsed time reaches the predetermined time,
said control means controls said display control means to start a display operation to have a range, which includes a part associated with the selected item of the object, as the display range.

4. The apparatus according to any one of claims 1 to 3, further comprising storage means for storing the display range at the end timing.

5. The apparatus according to any one of claims 1 to 4, wherein the object is document data.

6. The apparatus according to any one of claims 1 to 4, wherein the object is image data.

7. The apparatus according to any one of claims 1 to 6, wherein the object is help information associated with setting operations of said display control apparatus.

8. The apparatus according to claim 7, wherein said display control apparatus is an image sensing apparatus comprising image sensing means, and
when a change instruction of a setting associated with an image sensing operation is received after the last display operation of the object was ended, said control means controls said display control means to start a display operation of a range, which is not based on the display range at the end timing, as the display range even when the instruction is received before the elapsed time reaches the predetermined time.

9. The apparatus according to claim 8, wherein the change instruction of the setting associated with the image sensing operation is a change instruction of an image sensing mode to be set of a plurality of image sensing modes.

10. The apparatus according to any one of claims 7 to 9, wherein said display control apparatus is an image sensing apparatus comprising image sensing means, and
when an image sensing process is executed immediately after the last display operation of the object was ended, even when the instruction is received before the elapsed time reaches the predetermined time, said control means controls said display control means to start a display operation to have a range, which is not based on the display range at the end timing, as the display range.

11. The apparatus according to any one of claims 1 to 10, further comprising reset instruction reception means for receiving a reset instruction from a user,
wherein when said reset instruction reception means receives the reset instruction, said control means controls said display control means to start a display operation to have a range, which is not based on the display range at the end timing, as the display range even when the instruction is received before the elapsed time reaches the predetermined time.

12. The apparatus according to any one of claims 1 to 11, wherein the predetermined time is not more than 6 sec.

13. A control method of a display control apparatus for executing control to display an object on a display area, comprising:
an instruction step of receiving a display start instruction of the object;
a display control step of controlling to display a partial range of the object on the display area as a display range in place of a full range in response to the instruction received in the instruction step;
a change step of changing the display range of the object after a display operation of the object is started; and
a control step of controlling, when the instruction is received in the instruction step before an elapsed time since a last display operation of the object was ended reaches a predetermined time, to start a display operation in the display control step to have a range based on a display range at an end timing, which was displayed on the display area when the last display operation was ended, as the display range, and of controlling, when the instruction is received in the instruction step after the elapsed time reaches the predetermined time, to start a display operation in the display control step to have a range, which is not based on the display range at the end timing, as the display range.

14. A program for controlling a computer to function as respective means of a display control apparatus according to any one of claims 1 to 12.

15. A computer readable storage medium storing a program for controlling a computer to function as respective means of a display control apparatus according to any one of claims 1 to 12.
